Europäisches Patentamt

European Patent Office

Office européen des brevets

Publication number: **0 360 890**

**A1**

# EUROPEAN PATENT APPLICATION

21 Application number: 88115894.3

22 Date of filing: 27.09.88

51 Int. Cl.5 **B01D 3/38 , B01D 3/06 , B01D 1/28 , B01D 5/00**

43 Date of publication of application:
**04.04.90 Bulletin 90/14**

34 Designated Contracting States:
**BE DE GB IT NL**

71 Applicant: **THE DOW CHEMICAL COMPANY**
**2030 Dow Center Abbott Road P.O. Box 1967**
**Midland Michigan 48640-1967(US)**

72 Inventor: **Robbins, Lanny A.**
**3900 Tittabawasee River Road**
**Midland Michigan 48640(US)**

74 Representative: **Huber, Bernhard, Dipl.-Chem.**
**et al**
**Möhlstrasse 22 Postfach 860 820**
**D-8000 München 86(DE)**

54 **Distillation system and process.**

57 A distillation system and process for removing vaporizable components from an aqueous medium including a distillation column (110) for receiving an aqueous medium (120) containing vaporizable components and for passing steam (121) through the column such that the steam directly contacts the aqueous medium to vaporize at least a portion of the components, a condenser (112) in communication with the column to condense at least a portion of the vapor in the column, a separator (113) in communication with the condenser to separate flash vapor from liquid condensate in the separator, and a thermal compressor (111) in communication with the separator and the column to remove vapor from the separator and to inject exhaust steam (121) from the thermal compressor into the column (110).

Fig. 1

# DISTILLATION SYSTEM AND PROCESS

This invention relates to a distillation system and process for recovering vaporizable components from an aqueous medium.

In commercial distillation processes, i.e., stripping, fractionation and rectification processes, steam is used to vaporize and expel volatile components from water containing other elements, salts or compounds. A substantial quantity of steam is consumed in such conventional processes, increasing the operating costs of such processes. In a basic distillation process, for example, in a strapping system, the industry has continued to seek further optimization in terms of lower energy requirements, lower capital expenditures, i.e., reduction in the number of pieces and size of required apparatuses and a reduction of solution flow rates while maintaining high throughput.

It is desired in this invention to provide an improvement in a process for removing vaporizable components from an aqueous medium containing a mixture of vaporizable components and other salts, elements and compounds whereby steam consumption is minimized.

More particularly the present invention resides in a distillation system for removing vaporizable components from an aqueous medium comprising:

(a) a distillation column adapted to receive an aqueous medium containing vaporizable components and passing steam therethrough to directly contact the aqueous medium within the steam and vaporize at least a portion of the vaporizable components,

(b) at least one condenser in communication with the distillation column for condensing at least a portion of the vapors received from the distillation column,

(c) a separator in communication with the condenser and adapted for separating vapor from liquid in a recirculation fluid received from the condenser, and

(d) a thermal compressor connected to the separator and the column for removing vapors from the separator and for injecting exhaust motive steam into the column.

Additionally, the present invention resides in a distillation process for removing vaporizable components from an aqueous medium comprising:

(a) introducing an aqueous medium containing vaporizable components in a distillation column for removing a portion of the vaporizable components from the aqueous medium,

(b) passing through the aqueous medium a current of steam from a thermal compressor to vaporize at least a portion of the vaporizable components,

(c) passing at least a portion of the vapors from the distillation column through a first space of at least one condenser having a first and a second space to condense at least a portion of the vapors to a condensate,

(d) passing a recirculation liquid to the second space of the condenser and from the condenser to a separator to separate steam from aqueous liquid, and

(e) passing the steam from the separator through the thermal compressor to form steam for introducing into the distillation column.

Figure 1 is a schematic representation of one embodiment of a system useful in practicing the present process.

Figure 2 is a schematic representation of another embodiment of a system useful in practicing the present process.

Figure 3 is a schematic representation of another embodiment of a system useful in practicing the present process.

Figure 4 is a schematic representation of yet another embodiment of a system useful in practicing the present process.

The present distillation system and process as illustrated in the drawings and as described below may be useful for removing any vaporizable component(s) from an aqueous medium.

By "aqueous medium" it is meant (1) water containing a vaporizable component or mixture of vaporizable components, or (2) water containing a vaporizable component or mixture of vaporizable components in combination with other salts, elements or compounds dissolved or dispersed in the water.

By "vaporizable components" it is meant components with a relative volatility to water greater than 1.0 when they are dissolved in water. For example, vaporizable components may include trichloroethane, propylene chlorohydrin, bromine, methylene chloride, benzene, toluene and mixtures thereof.

The vaporizable components in the aqueous medium are vaporized with steam by contacting the aqueous medium with the steam at conditions sufficient to vaporize at least a portion of the vaporizable components. Steam may be used as the vaporizing gas, for example, at a temperature of from 10°C to 120°C and a pressure of from 9 to 1500 mm Hg. Preferably, steam at a temperature of from 50°C to 100°C and a pressure of from 90 to 760 mm Hg is used. Contacting the vaporizable components in the aqueous medium with steam is preferably carried out by countercurrent flow.

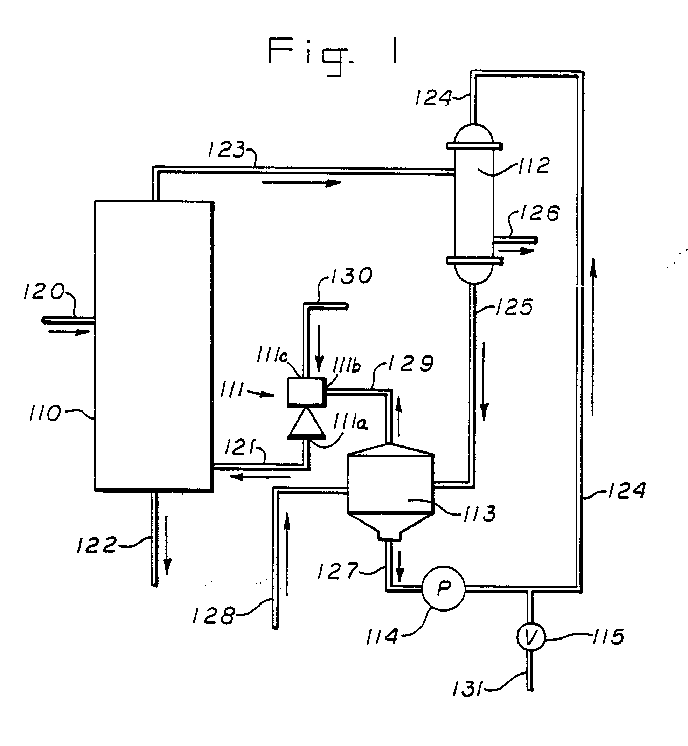

Referring now to Figure 1, an aqueous medium feed material containing a vaporizable component(s) is introduced, through a conduit 120, into an evaporation apparatus 110 such as a column or tank wherein the aqueous medium feed material is contacted with a stream or current of vaporizing gas such as steam to vaporize vaporizable components in the feed material. The apparatus 110, herein referred to as a distillation column may be a stripping column, a fractionation column or rectification column. The current of steam is introduced into column 110 through a conduit 121 from the discharge section 111a of a thermal compressor 111. The steam contacts the feed material under process conditions sufficient to vaporize substantially all of the vaporizable components in the feed material. Preferably, the contacting of feed material with the steam is carried out in a countercurrent fashion.

An aqueous liquid material leaves the column 110 through a conduit 122 located near the bottom of the column 110 to a use point. Vapors, i.e., the vapors containing the vaporizable components, formed in the column 110 pass through a conduit 123 located near the top of the column 110 to a condenser 112 adapted for condensing at least a portion of the vapors to an aqueous condensate. A conventional condenser, for example, a shell and tube-type heat exchanger may be used. Preferably, the vapors are passed through the shell-side of the condenser 112 and a "recirculated fluid" adapted for use as a cooling fluid for cooling at least a portion of the vapors in the condenser 112 is passed through the tube-side of the condenser 112 such that at least a portion of the vapors in the shell-side of the condenser 112 are condensed to a liquid condensate. By "recirculated fluid" in the present invention it is meant a substantially aqueous stream such as water or water mixed with salts, elements and other compounds. The recirculated fluid may be in the form of a liquid or a mixture of liquid and vapor. The recirculated fluid is preferably maintained at a temperature of from $0°C$ to $8°C$ lower than the column 110 overhead vapor stream in conduit 123.

As shown in Figure 1, the recirculated fluid is passed through the condenser 112 through conduit 124 from a separator 113 and exits the condenser 112 through a conduit 125. Any noncondensable gases and uncondensed vapors in the shell side of the condenser 112 exit the condenser 112 and are passed to a use point or to a point for further processing through a conduit 126. In addition to the uncondensed vapors exiting the condenser 112 through the conduit 126, at least a portion of the condensed vapors or liquid condensate referred to herein as the overhead distillate, may be transferred to a use point or to a point for further processing through the conduit 126.

The recirculated fluid, in the conduit 125, may contain vapor as steam and liquid as water. The recirculated fluid passes through the conduit 125 to a separator 113 to separate the vapor from the liquid. In addition, the separator 113 serves as a flash tank for flashing at least a portion of the liquid into steam herein referred to as "flash steam". The recirculated fluid in the separator 113 exits the separator 113 through a conduit 127 as a liquid and is pumped through the conduit 124 to the tube-side of the condenser 112 by a pump 114. The recirculated fluid may be supplemented, as required, with makeup recirculated fluid supplied through a conduit 128 from any source to the separator 113. For example, a stream of hot water may be introduced to the separator 113. Although the water is introduced into the separator 113, the makeup water may be introduced at any point of the "recirculated fluid loop" consisting of the conduit 124, the conduit 125 and the conduit 127.

Any flash steam present in the separator 113 is passed through a conduit 129 to the thermal compressor 111 and taken up by the suction inlet 111b of the thermal compressor 111. The actuating gas for the thermal compressor is motive steam passing through a conduit 130 to the actuating gas inlet 111c of the thermal compressor 111. The motive steam may be supplied from any source. Typically, steam at from 30 to 100 psig (3.13 to 10.3 $kg/cm^2$) is used. The discharge section 111a of thermal compressor 111 is in communication with the conduit 121 which, in turn, is connected to column 110 to supply the steam used in the column 110 for contacting the aqueous medium and vaporizing the vaporizable components in the aqueous medium.

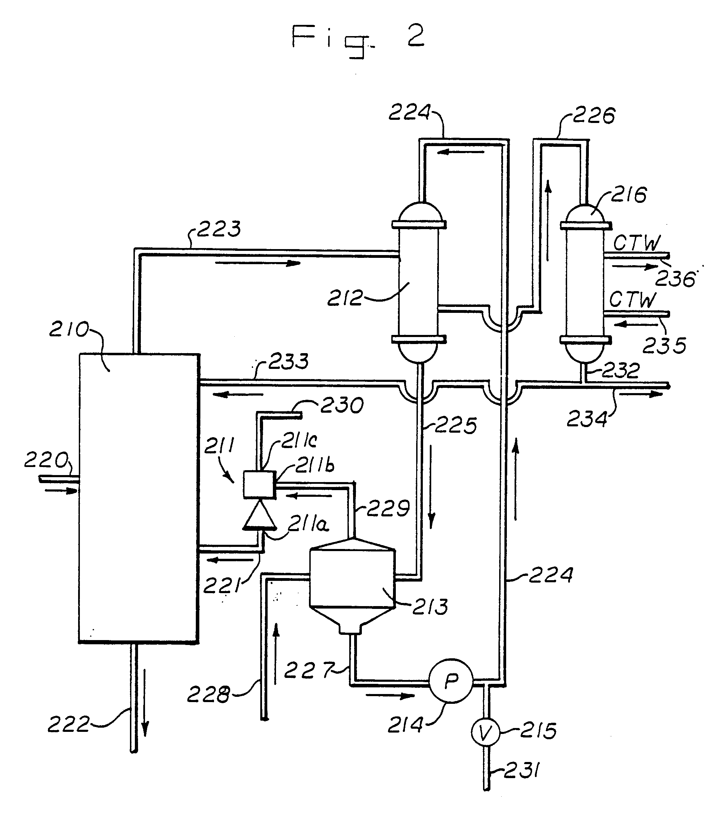

With reference to Figure 2, there is shown another embodiment of a distillation system according to the present invention which is particularly useful for stripping and enriching miscible compounds from water containing other compounds. Other compounds may include, for example, those which tend to increase the boiling point of the water, for example, salt, sulfuric acid or caustic. The distillation system shown in Figure 2 may also be useful for stripping and enriching miscible compounds from water that contains low volatility corrosive compounds such as, for example, bromine and iodine.

Since the distillation system of Figure 2 is, to a major extent, identical to that of Figure 1, it will not be described herein again. The reference numbers in Figure 2 denoting the same structural features of Figure 1 are used in the same order except that they are numbered in the 200 range.

In Figure 2, the noncondensable gases, uncondensed vapors and at least a portion of the condensed vapors in the shell side of the condenser 212 are passed through a conduit 226 to a second condenser 216 to condense substantially all the vapors to a liquid condensate. The condenser 216 may also be a conventional shell and tube-type heat exchanger. Any conventional cooling fluid, such as cooling tower water may be passed through the conduit 235 and 236 and used for cooling the vapors in the condenser 216. The condensed vapor or liquid condensate, referred to herein as the overhead distillate, is passed through a conduit 232, and preferably, at least a portion of the overhead distillate is refluxed or recycled back to the column 210 through a conduit 233. Optionally, the overhead distillate from the conduit 232 may be combined with a portion of the condensed vapors of the condenser 212 (not shown). In this instance, at least a portion of the overhead distillate from the conduit 232 may be transferred to a use point or to a point for further processing through a conduit 234.

Although not shown in Figure 2, the bottoms exiting through the conduit 222 may be used to preheat the feed material via a heater exchanger means preferably, made of corrosion resistant material. The heat exchanger means may be, for example, a shell and tube-type heat exchanger. For example, the feed material may be preheated by introducing the feed material into the tube-side of the heat exchanger and substantially simultaneously introducing the bottoms of column 210 into the shell-side of the heatexchanger sufficient to preheat the feed material. The preheated material existing the exchanger may then be introduced into the distillation column 210 via the conduit 220. Although not shown in Figure 2, at least a portion of the condensed vapors from the condenser 212 may be refluxed back to the column 210 near the top of the column 210.

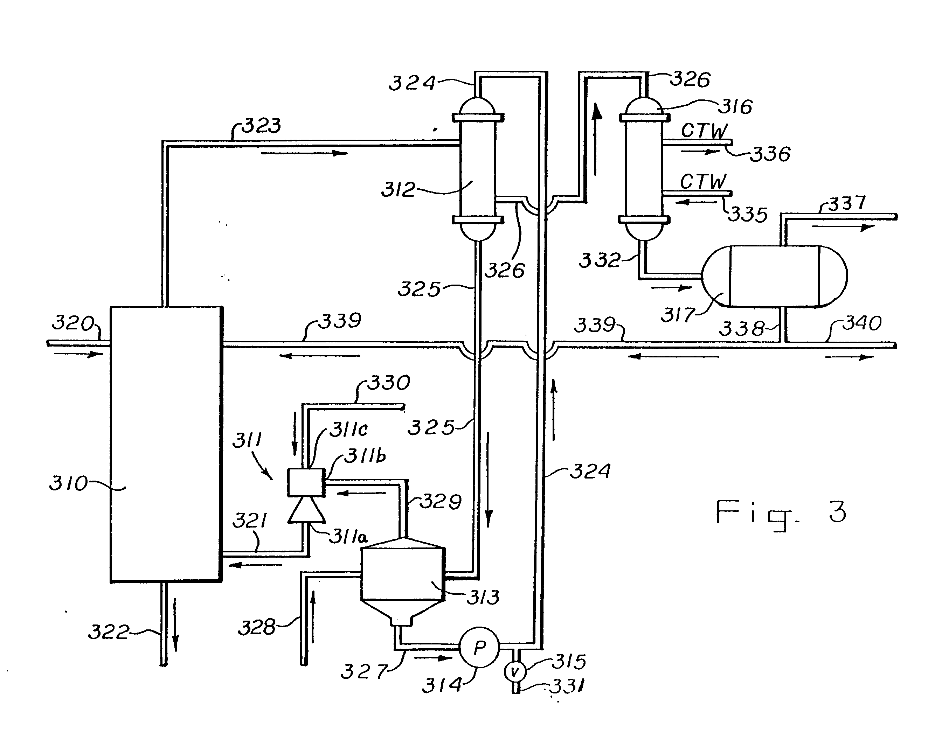

Another embodiment of a distillation system according to the present invention is shown in Figure 3. Since the distillation system of Figure 3 is, to a major extent, identical to that of Figure 1, it will not be described herein again. The reference numbers in Figure 3 denoting the same structural features of Figure 1 are used in the same order except that they are numbered in the 300 range.

The system of Figure 3 is particularly useful for stripping and enriching partially miscible components from an aqueous medium containing other dissolved compounds such as salt, sulfuric acid or caustic which increase the boiling point of the aqueous medium above pure water. In the distillation system of Figure 3, an aqueous medium feed material containing vaporizable components is introduced into a distillation column 310 through the conduit 320 near the top of the column and a decanter 317 is used for decanting at least a portion of at least one liquid stream from another liquid stream.

The condensed vapors or liquid condensate, herein referred to as the overhead distillate, in condenser 316 is passed from the condenser 316 through a conduit 332 to the decanter 317 for decanting an overhead distillate product from an aqueous stream. Although not shown in Figure 3, at least a portion of the condensed vapors from the condenser 312 and at least a portion of the overhead distillate from the condenser 316 may be combined in one conduit and passed to the decanter 317. At least a portion of the overhead distillate product and at least a portion of the aqueous stream are separated in the decanter 317. The aqueous stream is passed through a conduit 338 and at least a portion of the aqueous stream is refluxed back to the column 310 through a conduit 339. At least a portion of the aqueous stream is passed to a use point through a conduit 340. The overhead distillate product from the decanter 317 is passed to a use point through a conduit 337. A valve 315 and a conduit 331 are used for removing at least a portion of the recirculated fluid from the conduit 324.

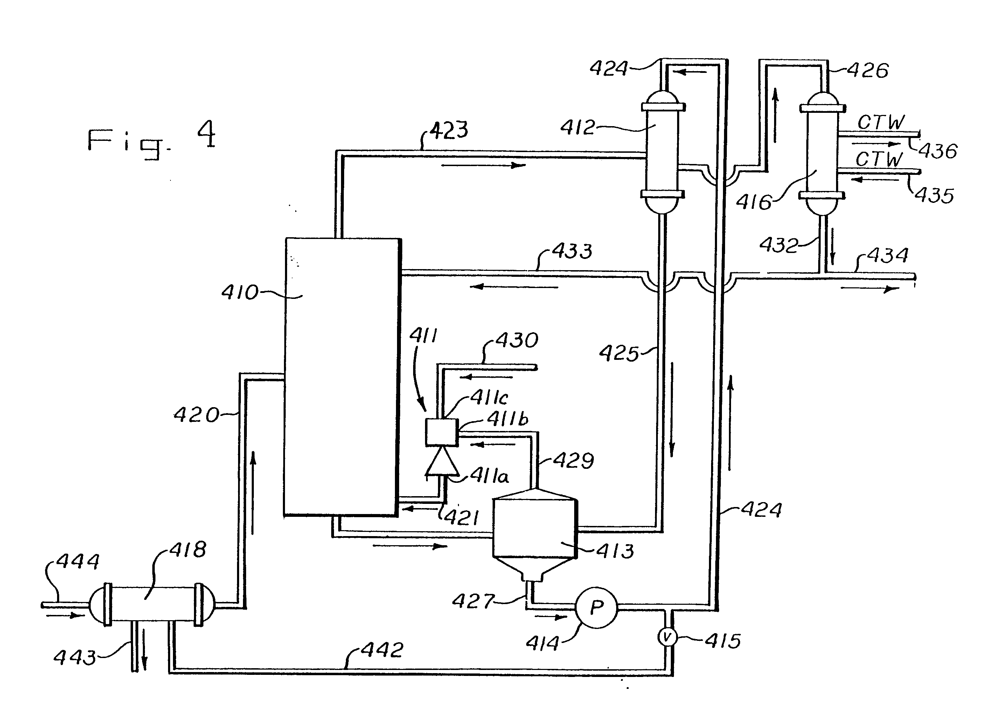

Another embodiment of the distillation system similar to the system illustrated in Figures 2 and 3 is shown in Figure 4. Since the distillation system of Figure 4 is, to a major extent, identical to that of Figure 1, it will not be described herein again. The reference numbers in Figure 4 denoting the same structural features of Figure 1 are used in the same order except that they are numbered in the 400 range.

The system of Figure 4 is particularly useful for distilling miscible components from an aqueous medium such as water when the column 410 bottom temperature is within about $15^\circ$ C or less, (i.e., from 0 to $15^\circ$ C) of the overhead vapors in conduit 423 temperature. An aqueous medium feed material containing vaporizable components is introduced, through a conduit 444 into a preheater 418 for preheating the feed material prior to introducing the feed material into she column 410. In this instance, the preheater 418 may be a conventional heat exchanger of the shell and tube-type. The aqueous medium feed material is passed through the conduit 444 and through the tube-side of the preheater 418. The preheated feed material exits the preheater 418 and passes through a conduit 420 into the column 410. A liquid for heating the feed material is passed through a conduit 442 and through the shell-side of the preheater 418. The liquid, preferably, is at a temperature sufficient to heat the aqueous feed material from 0 to $20^\circ$ C below boiling point of the feed material and preferably from 0 to $8^\circ$ C below the boiling point of the feed material. Preferably, at least a portion or side stream of the recirculated fluid stream in the conduit 424 being pumped from the separator 413 is taken through a valve 415 and the conduit 442 and used as the heating liquid for the preheater 418. The side stream of the recirculated fluid enters the shell-side of the preheater 418 and exits through a conduit 443 to a use point.

The following examples are to illustrate the present invention and the invention is not to be limited thereby.

Example 1

This example may be carried out using a distillation system as described in Figure 2. In this example, a concentration of 4 percent by weight (wt%) propylene chlorohydrin is stripped from an aqueous feed mixture of propylene chlorohydrin, water and hydrochloric acid and enriched to a concentration of 40 wt% propylene chlorohydrin in water. The feed mixture is fed to the center of a distillation column. As liquid feed moves down the column, it is stripped substantially free of propylene chlorohydrin by a rising flow of steam. The vapors leaving the feed point of the column are enriched in propylene chlorohydrin and contain some hydrochloric acid vapor, but the hydrochloric acid is kept down in the column by the descending flow of liquid in the upper section of the column. The vapors leaving the top of the column are rich in propylene chlorohydrin and substantially free of hydrochloric acid. The vapors pass through the shell-side of a partial condenser and leave a stream of vapor that is enriched even further in propylene chlorohydrin. The liquid in the shell-side of the partial condenser may be refluxed back to the top of the distillation column. Cooling on the partial condenser is brought about by the flash evaporation of water inside the tube-side of the condenser at a reduced pressure that is approximately 0.5 times the column pressure. The flash steam and water from the tube-side of the partial condenser are separated in a vapor-liquid separator tank, and the water from the tank is recirculated to the tube-side of the partial condenser. Hot condensate water is added to the circulating water to maintain a liquid level in the vapor liquid separator tank. The reduced pressure on the separator tank is produced by a thermal compressor which draws the flash steam out of the vapor-liquid separator and mixes the flash steam with the motive steam going to the bottom of the distillation column.

The vapors leaving the partial condenser are conducted to a total condenser. Part of the liquid condensate from the total condenser is refluxed to the column, and the rest is taken out of the process as enriched propylene chlorohydrin in water. The pressure on the column is controlled by the pressure of the vacuum after the total condenser. This process produces a propylene chlorohydrin containing a reduced amount of water and hydrochloric acid and minimizes the steam consumption that is required to perform this separation.

Example 2

This example may be carried out using a distillation system as described in Figure 3. A concentration of 0.8 wt% phenol and 20 wt% sodium chloride in water, herein referred to as the brine feed, is fed near the top of a stripping column and distributed over a packing in the column at a rate of 8,000 pounds per hour (lb/hr) (3629 kg/hr). Steam is introduced into the column near the bottom of the column at a rate of 2,000 lb/hr (907 kg/hr). The steam flows up the column counter current through the flow of brine feed. The phenol is stripped from the brine feed and enriched in the overhead vapor leaving the top of the column at a rate of 1,120 lb/hr (508 kg/hr).

The rest of the steam condenses in the column to heat the brine feed to its boiling point. The overhead vapor entering a first condenser is partially condensed, approximately 600 lb/hr (272 kg/hr) and the remainder of the vapor, 520 lb/hr (236 kg/hr) is condensed in a second condenser. All of the condensate from the second condenser is cooled to approximately 60°C or lower to cause the formation of two liquid layers. An aqueous layer is returned to the top of the stripping column to be mixed with the brine feed to be stripped free from phenol. The brine leaving the bottom of the column contains approximately 50 parts per million phenol. The 2,000 lb/hr (907 kg/hr) of steam entering the bottom of the column contains 1,400 lb/hr (635 kg/hr) of motive steam and 600 lb/hr (272 kg/hr) of flash steam. The flash steam is produced by drawing a vacuum on a flash distillation chamber. The pressure of the diameter is at about one half of the pressure that is on the column. The vacuum is produced by the motive steam passing through a thermal compressor before entering the column. The vacuum flash distillation reduces the temperature of the water in the flash chamber so that the water can be used to remove heat in the partial condenser on the overhead vapor stream. The amount of water used to generate flash steam is made up with hot condensate that is available from the other processes condense steam for heat. The overall process improvement is in the requirement of only 1,400 lb/hr (635 kg/hr) of boiler steam instead of the 2,000 lb/hr (906 kg/hr) that is required without this improved process.

Example 3

This example is the same as Example 2 except that residual monomers are removed from polymer latex emulsions or suspensions. In this example, styrene and butadiene removed from a styrene butadiene latex. In this example, a latex feed of 10,000 lb/hr (4536 kg/hr) is stripped with 3,000 lb/hr (1361 kg/hr) of steam wherein 2,000 lb/hr (907 kg/hr) is motive steam and 1,000 lb/hr (454 kg/hr) is recovered as flash steam. The hot condensate used is condensate that is generated by partial condensation of the overhead vapor.

Example 4

This example may be carried out using the system as described in Figure 4. In this example 1 weight percent concentration of phenol in water is stripped from water and enriched to a concentration of 9 percent phenol which is the concentration near the azeotropic concentration. A feed stream of 600 lb/hr (272 kg/hr) of water containing 1 percent phenol enters the distillation column and the phenol is stripped out with 1000 lb/hr (454 kg/hr) of steam wherein 700 lb/hr (317.5 kg/hr) is motive steam and 300 lb/hr (138 kg/hr) is flash steam. The flash steam is produced by drawing a vacuum on a flash distillation chamber. The pressure at the flash chamber is about one half of the pressure that is on the column. The vacuum is produced by the motive steam passing through a thermal compressor before entering the column. The vacuum flash distillation reduces the temperature of the water in the flash chamber so that the water can be used to remove heat in the partial condenser on the overhead vapor stream. The water used to generate the flash steam comes from the column bottoms stream which is allowed to pass to the flash distillation chamber to be separated into flash steam and recirculation liquid.

The overhead vapor from the column containing 9 percent phenol flows at a rate of about 888 lb/hr (403 kg/hr). The vapor is partially condensed in the shell-side of the first condenser with recirculation liquid passing through the tube-side of the condenser. The remainder of the vapors is condensed in the shell-side of a second condenser with cooling tower water passing through the tube-side of the second condenser. About 821 lb/hr (372 kg/hr) of the overheads condensate from the first and second condensers is refluxed back to the column while 67 lb/hr (30.4 kg/hr) is taken off as overheads condensate.

Claims

1. A distillation system for removing vaporizable components from an aqueous medium comprising:

a. a distillation column adapted to receive an aqueous medium containing vaporizable components and passing steam therethrough to directly contact the aqueous medium within the steam and vaporize at least a portion of the vaporizable components,

b. at least one condenser in communication with the distillation column for condensing at least a portion of the vapors received from the distillation column,

c. a separator in communication with the condenser and adapted for separating vapor from liquid in a recirculation fluid received from the condenser, and

d. a thermal compressor connected to the separator and the column for removing vapors from the separator and for injecting exhaust motive steam into the column.

2. The distillation system of Claim 1 including a second condenser connected to the first condenser, the second condenser being adapted for condensing substantially all of the vapors received from the heat condenser.

3. The distillation system of Claim 2 including a decanting means connected to the second condenser, said decanting means being adapted for separating at least two liquids.

4. The distillation system of Claim 1 including a preheater connected to the distillation column, the preheater being adapted for heating the aqueous medium.

5. A distillation process for removing vaporizable components from an aqueous medium comprising:

a. introducing an aqueous medium containing vaporizable components in a distillation column for removing a portion of the vaporizable components from the aqueous medium,

b. passing through the aqueous medium a current of steam from a thermal compressor to vaporize at least a portion of the vaporizable components,

c. passing at least a portion of the vapors from the distillation column through a first space of at least one condenser having a first and a second space to condense at least a portion of the vapors to a condensate,

d. passing a recirculation liquid to the second space of the condenser and from the condenser to a separator to separate steam from aqueous liquid, and

e. passing the steam from the separator through the thermal compressor to form steam for introducing into the distillation column.

6. The process of Claim 5 including the step of passing the vapors from the condenser through a second condenser to condense substantially all of the vapors.

7. The process of Claim 6 including the step of passing the condensed vapors from the second condenser to a decanting means to separate at least two liquids.

8. The process of Claim 5 or 6 including the step of preheating the aqueous medium in a preheater prior to introducing the aqueous medium to the distillation column.

9. The process of Claim 8 including the step of passing at least a portion of the recirculation fluid to the preheater for preheating the aqueous medium.

10. The process of anyone of the preceding claims including the step of passing a bottom stream from the distillation column to the separator.

11. The process of anyone of the preceding claims including the step of recycling at least a portion of the aqueous condensate from the condenser to the distillation column.

12. The process of anyone of the preceding claims including the step of recycling at least a portion of the condensed vapors from the second condenser to the distillation column.

13. The process of Claim 7 including the step of recycling at least a portion of at least one liquid from the decanting means to the distillation column.

14. The process of anyone of the preceding claims including the step of adding an aqueous make-up stream to the recirculation fluid stream.

# Fig. 1

# Fig. 2

Fig. 3

EP 0 360 890 A1

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | US-A-2 282 982 (J.E. JEWETT) <br> * Page 2, right-hand column, line 32 - page 3, right-hand column, line 50; figures 2,3 * <br> --- | 1,3,5,8 ,9,11 | B 01 D 3/38 <br> B 01 D 3/06 <br> B 01 D 1/28 <br> B 01 D 5/00 |
| X | US-A-1 886 256 (O.H. WURSTER) <br> * Page 3, lines 7-39; figures * <br> --- | 2,3,6,7 | |
| A | US-A-4 595 461 (L. JEROMIN et al.) <br> * Figure * <br> ----- | 2,4,6,8 | |

TECHNICAL FIELDS SEARCHED (Int. Cl.3)

B 01 D

The present search report has been drawn up for all claims

| Place of search | Date of completion of the search | Examiner |
|---|---|---|
| THE HAGUE | 26-05-1989 | VAN BELLEGHEM W.R. |

EPO FORM 1503 03.82 (P0401)